# EUROPÄISCHE PATENTSCHRIFT

(11) **EP 3 928 062 B1**
(45) Veröffentlichungstag und Bekanntmachung des Hinweises auf die Patenterteilung: **18.06.2025**
(21) Anmeldenummer: 20707373.5
(22) Anmeldetag: 18.02.2020
(51) Int. Cl.: G01B 21/08, G01N 25/72

(54) **VERFAHREN UND VORRICHTUNG ZUR BESTIMMUNG EINER SCHICHTDICKE EINER AUF EIN SUBSTRAT AUFGEBRACHTEN SCHICHT**
METHOD AND DEVICE FOR DETERMINING A LAYER THICKNESS OF A LAYER APPLIED TO A SUBSTRATE
PROCÉDÉ ET DISPOSITIF POUR LA DÉTERMINATION D'UNE ÉPAISSEUR DE COUCHE D'UNE COUCHE APPLIQUÉE SUR UN SUBSTRAT

(30) Priorität: 20.02.2019 DE 102019104260
(43) Veröffentlichungstag der Anmeldung: 29.12.2021
(73) Patentinhaber: Böttger, Stefan, 66386 St. Ingbert (DE)
(72) Erfinder: Böttger, Stefan, 66386 St. Ingbert (DE)
(74) Vertreter: Zeiner, Johannes Michael
(86) Internationale Anmeldenummer: PCT/EP2020/054186
(87) Internationale Veröffentlichungsnummer: WO 2020/169571

(56) Entgegenhaltungen:
- EP-A1- 0 447 775
- EP-A1- 3 086 087
- DE-A1- 10 331 070
- DE-A1- 102016 014 967
- DE-A1- 19 960 880
- US-A1- 2013 230 072
- US-A1- 2018 066 940
- LINDEMANN SÖREN ET AL: "Laser-angeregte Lockin-Thermografie zur zerstörungsfreien und berührungslosen Schichtdickenmessung von thermisch gespritzten Beschichtungen", DGZFP-JAHRESTAGUNG 2017, 2017, pages 1 - 13, XP093139649, Retrieved from the Internet <URL:https://www.ndt.net/article/dgzfp2017/papers/di1a2.pdf> [retrieved on 20240311]
- HOFFMANN DANIEL ET AL: "ADVANTAGES OF MULTI-PULSE THERMOGRAPHY", INTERNATIONAL SYMPOSIUM ON STRUCTURAL HEALTH MONITORING AND NONDESTRUCTIVE TESTING, 5 October 2018 (2018-10-05), pages 1 - 7, XP093139644, Retrieved from the Internet <URL:https://www.ndt.net/article/shmndt2018/papers/SHM-NDT-2018_paper_15.pdf> [retrieved on 20240311]

## Beschreibung

Die Erfindung betrifft ein photothermisches Verfahren zur Bestimmung einer Schichtdicke einer auf ein Substrat aufgebrachten Schicht, insbesondere einer Lackschicht, bei dem zumindest ein Oberflächenbereich des beschichteten Substrats ausschließlich durch Bestrahlung mit mindestens einer Strahlungsquelle erwärmt wird und von dem zumindest einen Oberflächenbereich emittierte Wärmestrahlung von einer Detektionseinrichtung erfasst und die Schichtdicke anhand der emittierten Wärmestrahlung bestimmt wird. Ferner betrifft die Erfindung eine Vorrichtung zur Bestimmung einer Schichtdicke einer auf ein Substrat aufgebrachten Schicht.

EP 3 086 087 A1 beschreibt ein fotothermisches Handmessgerät zur Bestimmung einer Schichtdicke einer auf ein Substrat 5 aufgebrachten Schicht, dessen Strahlungsquelle mehrere Nah-IR-LEDs (4) aufweist. Das Handmessgerät ist zur Bestimmung der Schichtdicke an einzelnen Punkten einer Oberfläche eingerichtet.

Aus DE 103 31 070 A1 ist kein photothermisches Verfahren, sondern ein Wirbelstromverfahren zur Bestimmung einer Schichtdicke bekannt, bei dem ein metallisches Substrat oder eine metallische Schicht ausschließlich induktiv erwärmt werden und anhand emittierter Wärmestrahlung eine Schichtdicke ermittelt wird.

US 2013/0230072 A1 beschreibt ein photothermisches Lock-In-Verfahren zur Bestimmung einer Komponentendicke einer Brennstoffzelle oder einer Rissdetektion mittels Anregung durch LEDs, bei dem zusätzlich eine induktive Erwärmung erfolgt.

Aus DE 199 60 880 A1 ist ein photothermisches Messverfahren bekannt, bei dem eine Schichtdicke durch Bestrahlung mit einem Festkörperlaser an einem einzigen Punkt eines Substrats bestimmbar ist.

DE 10 2016 014 967 A1 beschreibt ein weiteres photothermisches Verfahren zur Bestimmung einer Schichtdicke, bei dem mit einem Laserstrahl 12 angeregt und emittierte Wärmestrahlung mit einer IR-Kamera 18 erfasst wird.

Der Artikel "Advantages of multi-pulse thermography" von Daniel Hoffmann et al. beschreibt ein gepulstes Lock-in-Thermographie-Verfahren zur Schichtdickenmessung mit einer Blitzlampe und einer Bolometerkamera.

Aus dem Stand der Technik ist ein als Photothermie bezeichnetes Verfahren bekannt. Ein beschichtetes Substrat wird an einer Stelle mit einem Laser bestrahlt. Dort wird die Schicht erwärmt und emittiert insbesondere abhängig von einer Schichtdicke und einem Beschichtungsmaterial Wärmestrahlung, die mit einem Detektor erfasst wird. Die Emission der Wärmestrahlung erfolgt gegenüber der Bestrahlung mit einer sogenannten Phasenverschiebung Φ zeitversetzt. Durch Ermittlung von Φ, der emittierten Wärmestrahlung, insbesondere von deren Wellenlänge, sowie anhand bekannter Kalibrierkurven kann die Schichtdicke bestimmt werden.

Der vorliegenden Erfindung liegt die Aufgabe zugrunde, ein photothermisches Verfahren der eingangs genannten Art auszubilden, mit dem eine Schichtdicke an einem großen beschichteten Bauteil, beispielsweise einem Stoßfänger für ein Kraftfahrzeug, zuverlässig bestimmbar ist, wodurch eine einfache Qualitätskontrolle möglich ist.

Erfindungsgemäß wird die Aufgabe durch die Merkmale der unabhängigen Ansprüche 1 und 9 gelöst, und unter anderem dadurch dass mehrere benachbarte Oberflächenbereiche gleichzeitig oder nacheinander von der mindestens einen Strahlungsquelle bestrahlt werden und durch eine Auswerteinrichtung ein grafisch darstellbares Schichtdickenprofil einer zu vermessenden Oberfläche erstellt wird.

Zur Bestimmung der Schichtdicke kann eine zu vermessende Oberfläche in mehrere einzeln zu vermessende Oberflächenbereiche unterteilt werden, deren jeweils mittlere Oberflächenbereichsschichtdicken zu einem Schichtdickenprofil der Oberfläche zusammengefügt werden können. Der mindestens eine Oberflächenbereich wird von der mindestens einen Strahlungsquelle angestrahlt und erwärmt. Von dem Oberflächenbereich emittierte Wärmestrahlung ist charakteristisch für eine bestimmte Schichtdicke und wird von der Detektionseinrichtung erfasst und an die Auswerteinrichtung übermittelt. Durch Vergleich eines erfassten Wärmestrahlungsverlaufs und/oder eines aus dem Wärmestrahlungsverlauf ermittelten Parameters, insbesondere der Phasenverschiebung Φ, mit einer Kalibrierkurve kann die Auswerteinrichtung die Schichtdicke ermitteln und einen Messwert oder ein Schichtdickenprofil ausgeben.

Werden mehrere, vorzugsweise benachbarte Oberflächenbereiche nacheinander von der mindestens einen Strahlungsquelle bestrahlt und wird durch eine Auswerteinrichtung ein grafisch darstellbares Schichtdickenprofil einer zu vermessenden Oberfläche erstellt, kann eine Oberfläche großer Substrate in mehrere kleinere Oberflächenbereiche unterteilt werden, die nacheinander erwärmt und vermessen werden, um daraus ein Schichtdickenprofil für die gesamte Oberfläche zu bestimmen.

Denkbar ist außerdem, das ein einziger Oberflächenbereich der gesamten zu vermessenden Oberfläche entspricht.

Ein grafisch darstellbares Schichtdickenprofil kann beispielsweise einem Bediener auf einem Anzeigebildschirm direkt angezeigt werden. Durch geeignete Wahl von Schichtdickengrenzwerten kann unmittelbar angezeigt werden, ob diese Grenzwerte an einigen Stellen über- oder unterschritten werden. Damit wird eine einfache Qualitätskontrolle möglich. Fehlerhaft beschichtete Substrate können aussortiert werden.

Thermische Strahler können beispielsweise Heizstrahler sein.

Zweckmäßigerweise wird der mindestens eine Oberflächenbereich mit einer monochromatischen und/oder kohärenten Strahlungsquelle bestrahlt oder mit elektromagnetischer Strahlung eines bestimmten Wellenlängenbereichs, vorzugsweise zwischen 200 nm und 15 µm, insbesondere zwischen 200 und 750 nm, zwischen 800 und 3500 nm oder zwischen 4 und 13 µm. Die Strahlungsquelle umfasst erfindungsgemäß einen QCL-Laser (=Quantenkaskadenlaser), insbesondere für eine Wellenlänge zwischen 4 und 13 µm.

Soll mit elektromagnetischer Strahlung eines bestimmten Wellenlängenbereichs bestrahlt werden, ist zusätzlich die Verwendung einer oder mehrerer, insbesondere farbiger, beispielsweise blauer, Leuchtdioden (light emitting diodes; LED) denkbar. Dies ist insbesondere dann vorteilhaft, wenn die Lackschicht einer Schutzhülle oder ein Gehäuse für ein Mobiltelefon farbig ist. Durch geeignete Wahl einer Strahlungsquelle wird eine besonders gute Absorption der Strahlung und damit eine besonders gute Erwärmung, die zu einer erfassbaren Emission von Wärmestrahlung führt, erreicht. Je besser die Absorption, desto besser ist ein Messergebnis, anhand dessen die Schichtdicke bestimmt wird.

Außerdem ist denkbar, dass Leuchtdioden verwendet werden, die im ultravioletten oder infraroten Wellenlängenbereich emittieren. Die Strahlungsquelle weist vorzugsweise eine Wellenlänge oder einen Wellenlängenbereich im nahen IR-Bereich auf, insbesondere zwischen 800 und 1600 nm. Die zur Erwärmung eines zu vermessenden, beschichteten Substrats verwendete Wellenlänge oder der Wellenlängenbereich sind nicht im für einen Bediener sichtbaren Wellenlängenbereich. Vorteilhaft kann die Vorrichtung ein offenes Gehäuse aufweisen und ohne Abschirmung oder Blendschutz betrieben werden. Eine Konstruktion wird dadurch vereinfacht und ein besonders sicherer Arbeitsplatz für eine die Vorrichtung bedienende Person geschaffen.

In einer Ausgestaltung der Erfindung wird der mindestens eine Oberflächenbereich mit mehreren gleichen oder voneinander verschiedenen Strahlungsquellen bestrahlt. Gleiche Strahlungsquellen emittieren identische Wellenlängen oder identische Wellenlängenbereiche, während voneinander verschiedene Strahlungsquellen voneinander verschiedene Wellenlängen oder Wellenlängenbereiche emittieren. Wellenlängenbereiche sind voneinander verschieden, wenn zentrale Wellenlängen voneinander verschieden sind. Vorteilhaft kann bei Verwendung mehrerer gleicher Strahlungsquellen eine besonders hohe Leistung zur Erwärmung bereitgestellt werden. Denkbar ist ferner, dass ein besonders großer Oberflächenabschnitt, der mehrere Quadratzentimeter oder mehrere Quadratmeter betragen kann, zur Schichtdickenbestimmung bestrahlt wird.

Weiter vorteilhaft kann eine bestehende Messvorrichtung um eine oder mehrere, vorzugsweise verschiedene weitere Strahlungsquellen ergänzt werden, um eine Schichtdickenmessung an einem weiteren, insbesondere andersartigen beschichteten Substrat zu ermöglichen. Beispielsweise kann eine Dicke einer auf einen Eisenbahnwagen aufgebrachten obersten Lackschicht durch Bestrahlung mit Leuchtdioden bestimmt werden, während eine Dicke einer darunter liegenden Füllschicht durch Bestrahlung mit Halogenlampen bestimmbar ist.

Denkbar ist ferner, dass die mehreren Strahlungsquellen in ein einziges Gehäuse eingebracht sind. Die könnten beispielsweise mehrere voneinander verschiedene Leuchtdioden (LED) sein.

Zweckmäßigerweise wird der mindestens eine Oberflächenbereich mit mehreren Strahlungsquellen bestrahlt, von denen jede zur Erzeugung elektromagnetischer Strahlung eines bestimmten Wellenlängenbereichs oder einer bestimmten Wellenlänge eingerichtet ist. Werden mehrere, voneinander verschiedene Strahlungsquellen verwendet, kann eine Bestrahlung mit einem besonders breiten Wellenlängenbereich erfolgen. Beispielsweise können eine rote, eine grüne und eine blaue LED zur insbesondere gleichzeitigen Bestrahlung genutzt werden. Vorteilhaft kann insbesondere eine Schichtdickenbestimmung unabhängig von einer Farbe einer zu vermessenden Schicht ermittelt werden. Dies erlaubt eine flexible Nutzung einer Vorrichtung zur Durchführung des Verfahrens.

Denkbar ist, dass die Wellenlängenbereiche der mehreren Strahlungsquellen keine Überlappungsbereiche aufweisen.

Denkbar ist außerdem die Verwendung einer superluminiszenten Diode, die elektromagnetische Strahlung eines breiten Wellenlängenbereichs bei gleichzeitig hoher räumlicher Kohärenz emittiert. Vorteilhaft kann eine einzige Strahlungsquelle ausreichen, um mit einer einzigen Vorrichtung eine Schichtdicke unterschiedlich farbiger Schichten bestimmen zu können.

In einer weiteren Ausgestaltung der Erfindung erfolgt die Bestrahlung des mindestens einen Oberflächenbereichs periodisch moduliert, insbesondere mit einer Frequenz zwischen 0,01 und 2000 Hz, vorzugsweise 20 bis 800 Hz. Vorzugsweise wird für jede Periode eine Temperaturveränderung des Oberflächenbereichs erfasst. Durch eine periodische Bestrahlung kann von einer Auswerteinrichtung ein Schichtdickenwert pro Periode oder eine Dicke einer Lage der Schicht pro Periode ermittelt werden. Durch Mittelwertbildung über alle Perioden kann ein besonders genauer Wert für die Schichtdicke bestimmt werden.

Für ein Kunststoffsubstrat hat sich eine Frequenz von 10 bis 800 Hz, vorzugsweise zwischen 140 und 500 Hz, als besonders vorteilhaft erwiesen.

Zur Bestimmung einer Schichtdicke eines pulverbeschichteten Substrats sind Frequenzen zwischen 0,5 und 10 Hz vorteilhaft, während Lackschichtdickenmessungen bei metallischen Kraftfahrzeugbauteilen oder Kraftfahrzeugkarosserien Frequenzen zwischen 2 und 120 Hz erfordern. Insbesondere ist mit dem erfindungsgemäßen Verfahren die Messung einer Dicke einer Pulverschicht, die beispielsweise auf eine Elektrotauchlackierung (ETL) aufgebracht wurde, sehr gut ermittelbar.

Soll eine Dicke einer auf ein Band aufgebrachten Schicht bestimmt werden, sind Frequenzen zwischen 5 und 500 Hz vorteilhaft.

In einer weiteren Ausgestaltung der Erfindung erfolgt die Bestrahlung des mindestens einen Oberflächenbereichs einmalig durch einen Lichtimpuls. Vorteilhaft ist eine hohe Flächenleistung möglich. Ein solcher Lichtimpuls weist vorzugsweise eine Wellenlänge oder einen Wellenlängenbereich im Infrarotbereich (IR) auf und kann von einer Pulsstrahlungsquelle erzeugt werden.

In einer besonderen Ausgestaltung der Erfindung werden sämtliche Oberflächenbereiche, die zusammen eine Gesamtoberfläche bilden, nacheinander oder gleichzeitig mit der mindestens einen Strahlungsquelle impulsartig oder periodisch moduliert bestrahlt. Erfolgt die Bestrahlung periodisch moduliert, sind eine kontinuierliche Messung und eine kontinuierliche Messdatenerfassung möglich. Eine Nutzung einer erfindungsgemäßen Vorrichtung in einem kontinuierlichen Prozess, beispielsweise zur Lackschichtdickenmessung bei einer Automobilproduktion oder bei einer Herstellung beschichteter Bänder oder Folien ist möglich.

Zur Qualitätskontrolle großflächiger beschichteter Bauteile, beispielsweise von lackierten Stoßfängern für ein Kraftfahrzeug, ist denkbar, dass die mindestens eine Strahlungsquelle und/oder die Detektionseinrichtung bewegbar ist bzw. sind und vorzugsweise an einem Industrieroboter angebracht ist bzw. sind. Dadurch ist ein Vorbeiführen an dem Bauteil möglich. Eine bestehende Fertigungsstraße kann vorteilhaft um die Vorrichtung ergänzt werden.

Zweckmäßigerweise weist der mindestens eine Oberflächenbereich eine Größe, insbesondere einen Durchmesser, zwischen 0,2 µm und 200 cm auf, vorzugsweise zwischen 1 und 20 µm oder 0,2 und 2 cm. Je kleiner das zu untersuchende Substrat, desto kleiner kann ein zu untersuchender Oberflächenbereich sein. Beispielsweise kann bei einer Schutzhülle oder bei einem Gehäuse für ein Mobiltelefon ein Oberflächenbereich die gesamte einer Strahlungsquelle zugewandte Oberfläche umfassen oder zwischen 1 und 2 µm groß sein, während bei einem beschichteten Stoßfänger für ein Kraftfahrzeug ein Oberflächenbereich der gesamten einer Strahlungsquelle zugewandten Oberfläche entsprechen kann oder zwischen 0,5 mm und 2 cm groß sein kann.

In einer Ausgestaltung der Erfindung wird der mindestens eine Oberflächenbereich schräg oder parallel zu einer Oberflächenbereichsnormalen angestrahlt. Während bei einer interferometrischen Vermessung einer Oberfläche zur Bestimmung von deren beispielsweise optischen Eigenschaften eine Bestrahlung parallel zu einer Oberflächennormalen erfolgen muss, ist dies bei dem erfindungsgemäßen Verfahren nicht erforderlich. Eine Schichtdicke kann selbst dann zuverlässig ermittelt werden, wenn die Bestrahlung schräg zur Oberflächennormalen eines Oberflächenbereichs erfolgt. Vorteilhaft kann bei gebogenen, beschichteten Substraten eine Schichtdicke zuverlässig ermittelt werden. Eine Neupositionierung einer Strahlungsquelle und/oder der Detektionseinrichtung ist nicht erforderlich.

In einer Ausgestaltung der Erfindung ist die erfindungsgemäße Vorrichtung in ein optisches und/oder mechanisches Koordinatenmesssystem integriert. Vorteilhaft kann bei einer Vermessung eines Bauteils, insbesondere bei einer Qualitätskontrolle, eine zusätzliche, gegebenenfalls gleichzeitige Schichtdickenbestimmung vorgenommen werden. Beschichtete Substrate können lackierte Bauteile wie Fahrzeugaußenspiegel oder Stoßfänger für Kraftfahrzeuge sein oder lackierte Gehäuse oder lackierte Schutzhüllen für Mobiltelefone oder Laptop-Computer.

Das Substrat kann aus verschiedenen Materialien gebildet sein, beispielsweise aus einem metallischen, einem organischen und/oder einem anorganischen Werkstoff, insbesondere aus Stahl, Aluminium oder Magnesium oder einem Kunststoff wie Polypropylen, Polyurethan oder Silikon oder einer Keramik wie Aluminiumoxid oder Zirkonoxid.

Außerdem kann mit dem erfindungsgemäßen Verfahren eine Schichtdicke auf einem besonders rauhen Substrat, beispielsweise einem sandgestrahlten Substrat, zuverlässig ermittelt werden.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: eine erste Ausführungsform eines photothermischen Verfahrens und einer schematisch dargestellten Vorrichtung zur photothermischen Bestimmung einer Schichtdicke in einer perspektivischen Ansicht,
- Fig. 2: eine zweite Ausführungsform einer schematisch dargestellten Vorrichtung zur photothermischen Bestimmung einer Schichtdicke in einer perspektivischen Ansicht,
- Fig. 3: eine weitere Vorrichtung zur photothermischen Bestimmung einer Schichtdicke in einer perspektivischen Ansicht,
- Fig. 4: eine Ausführungsform einer schematisch dargestellten Vorrichtung zur photothermischen Bestimmung einer Schichtdicke in einer perspektivischen Ansicht,
- Fig. 5: eine erste erfindungsgemäße Ausführungsform einer schematisch dargestellten Vorrichtung zur photothermischen Bestimmung einer Schichtdicke in einer perspektivischen Ansicht,
- Fig. 6: eine zweite erfindungsgemäße Ausführungsform einer schematisch dargestellten Vorrichtung zur photothermischen Bestimmung einer Schichtdicke in einer perspektivischen Ansicht,
- Fig. 7: eine weitere Ausführungsform einer schematisch dargestellten Vorrichtung zur photothermischen Bestimmung einer Schichtdicke in einer perspektivischen Ansicht,
- Fig. 8: eine weitere Ausführungsform einer schematisch dargestellten Vorrichtung zur photothermischen Bestimmung einer Schichtdicke in einer Seitenansicht.

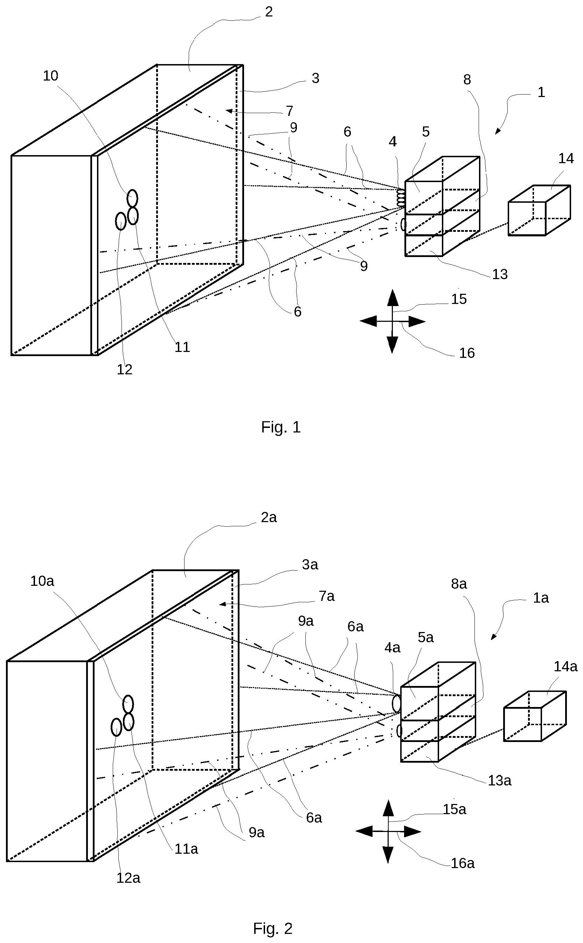

Eine in Fig. 1 schematisch in einer perspektivischen Ansicht dargestellte Vorrichtung (1) zur Bestimmung einer auf eine Mobiltelefonschutzschale (2) aufgebrachten Lackschicht (3) umfasst eine mehrere im IR-Bereich emittierende Leuchtdioden (LED) (4) aufweisende Strahlungsquelle (5), deren mit gestrichelten Linien schematisch dargestellter Bestrahlungskegel (6) zur Bestrahlung einer der Lichtquelle (5) zugewandten Lackoberfläche (7) vorgesehen ist. Obwohl ein impulsartiges Anblitzen der Lackoberfläche (7) denkbar ist, ist in diesem Ausführungsbeispiel eine periodische Bestrahlung mit einer Frequenz von 200 Hz vorgesehen.

Ferner umfasst die Vorrichtung (1) eine Detektionseinrichtung (8), die erfindungsgemäß als Bolometerkamera ausgebildet ist und die die gesamte Lackoberfläche (7) erfassen kann. Ein Erfassungsbereich (9) ist durch eine zweifach gepunktete, einfach gestrichelte Linie dargestellt und umfasst in diesem Ausführungsbeispiel die gesamte Lackoberfläche (7). Jeder Bildpunkt der Bolometerkamera (8) erzeugt ein Messsignal, das heißt einen zeitlichen Temperaturverlauf in einem einzelnen Messpunkt (10, 11, 12) auf der Lackoberfläche (7). Aus Gründen der Übersichtlichkeit sind den Fig. 1 bis 6 exemplarisch jeweils drei Messpunkte (10-12) gezeigt.

Eine Auswerteinrichtung (13) bestimmt anhand des Messsignals eine Dicke der auf die Mobiltelefonschutzschale (2) aufgebrachten Lackschicht (3) an dem jeweiligen Messpunkt (10-12). Dazu sind in der Auswerteinrichtung (13) Kalibrierkurven gespeichert, anhand derer einem Messsignal für den jeweiligen Messpunkt (10-12) eine Schichtdicke in dem Messpunkt zugeordnet werden kann.

Ferner ist die Auswerteinrichtung (13) mit einem Bildschirm (14) verbunden, auf dem ein einzelner Messwert oder ein Schichtdickenprofil, das heißt eine Schichtdickenverteilung über mehrere Messpunkte darstellbar ist.

Besonders vorteilhaft ist, wenn in der Auswerteinrichtung (13) Grenzwerte für eine Schichtdicke gespeichert sind und das Schichtdickenprofil farbig dargestellt wird, indem zu dick beschichtete Oberflächenbereiche beispielsweise gelb dargestellt werden, zu dünn beschichtete rot und solche, die innerhalb eines erforderlichen Schichtdickenbereichs liegen, grün dargestellt werden. Vorteilhaft können zu dünn oder zu dick lackierte Oberflächenbereiche von einem Bediener der Vorrichtung (1) schnell erkannt werden.

Obwohl die Detektionseinrichtung (8) erfindungsgemäß als Bolometerkamera ausgebildet ist, ist in nicht beanspruchten Varianten eine Ausbildung als IR-Kamera oder sonstiges Sensorarray zur Erfassung von Wärmestrahlung denkbar.

Obwohl außerdem denkbar ist, dass die Vorrichtung (1) dreidimensional bewegbar ist, ist sie in diesem und den folgenden Ausführungsbeispielen zweidimensional in Richtung von Pfeilen (15, 16) vertikal und horizontal bewegbar, wobei ein Abstand zu den Oberflächenbereichen vorzugsweise konstant 10 cm beträgt.

Ferner ist denkbar, dass eine aus Strahlungsquelle (5), Detektionseinrichtung (8) und/oder Auswerteinrichtung (13) gebildete Baugruppe ortsfest angeordnet ist und eine Mobiltelefonschutzschale (2) zur Bestimmung einer Lackschichtdicke vorbeigeführt wird. Dies kann entweder manuell durch einen Bediener der Vorrichtung oder maschinell erfolgen. Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Eine in Fig. 2 schematisch gezeigte Vorrichtung (1a) umfasst eine eine superluminiszente Leuchtdiode (4a) aufweisende Strahlungsquelle (5a), die zur impulsartigen oder periodischen Bestrahlung einer Lackoberfläche (7a) mit Licht eines Wellenlängenbereichs von 500 bis 800 nm bei einer Frequenz von 150 Hz vorgesehen ist.

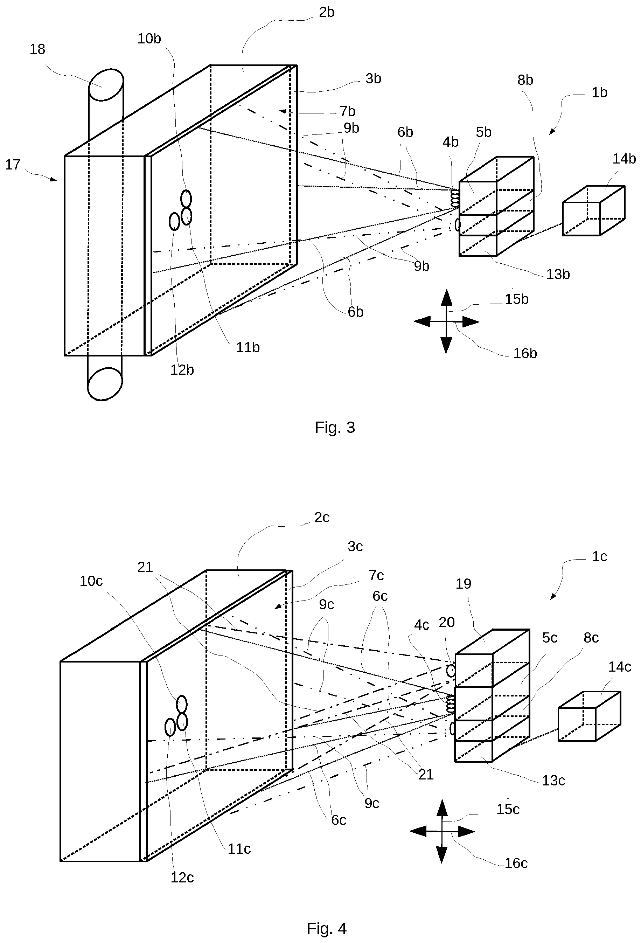

Es wird nun auf Fig. 3 Bezug genommen, wo gleiche oder gleichwirkende Teile mit derselben Bezugszahl wie in Fig. 1 und 2 bezeichnet sind und der betreffenden Bezugszahl jeweils der Buchstabe b beigefügt ist.

Ein in Fig. 3 in einer schematischen Ansicht gezeigte nicht erfindungsgemäße Vorrichtung (1b) ist zur Bestimmung der Dicke einer auf ein metallisches Bauteil (2b) aufgebrachten Pulverbeschichtung (3b) vorgesehen. Eine Erwärmung einer Lackoberfläche (7b) erfolgt in diesem Beispiel durch Bestrahlung mit einer Strahlungsquelle (5b) und induktiv durch eine auf einer einer Detektionseinrichtung (8b) abgewandten Seite (17) des Bauteils (2b) angebrachten Induktionseinrichtung (18). Die Detektionseinrichtung (8b) ist als Bolometerkamera ausgebildet, die eine Pulverbeschichtungsoberfläche (7b) erfassen kann.

Eine ausschließlich induktive Erwärmung der Lackoberfläche (7b) ist denkbar, aber nicht erfindungsgemäß.

Es wird nun auf Fig. 4 Bezug genommen, wo gleiche oder gleichwirkende Teile mit derselben Bezugszahl wie in Fig. 1, 2 und 3 bezeichnet sind und der betreffenden Bezugszahl jeweils der Buchstabe c beigefügt ist.

Eine in Fig. 4 gezeigte Vorrichtung (1c) unterscheidet sich von denjenigen in Fig. 1 bis 3 gezeigten dadurch, dass zwei voneinander verschiedene Strahlungsquellen (5c, 19) vorgesehen sind, die eine Lackoberfläche (7c) bestrahlen. In diesem Ausführungsbeispiel umfasst eine erste Strahlungsquelle (5c) mehrere blaue Leuchtdioden (4c), und eine zweite Strahlungsquelle (19) umfasst einen thermischen Strahler (20) mit einem Bestrahlungskegel (21), der die gesamte Lackoberfläche (7c) bestrahlt.

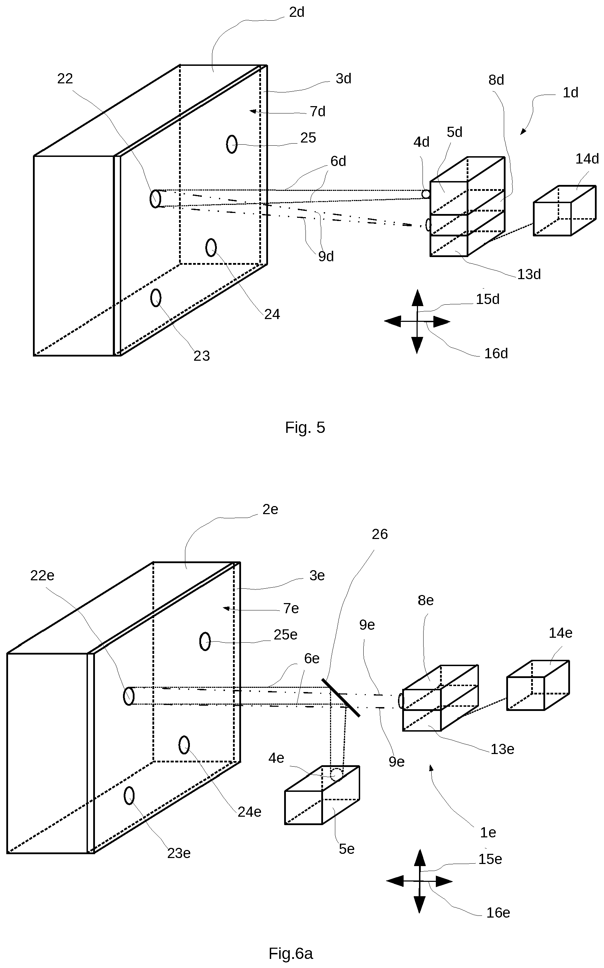

Es wird nun auf Fig. 5 Bezug genommen, wo gleiche oder gleichwirkende Teile mit derselben Bezugszahl wie in Fig. 1 bis 4 bezeichnet sind und der betreffenden Bezugszahl jeweils der Buchstabe d beigefügt ist.

Eine in Fig. 5 gezeigte Vorrichtung (1d) zur Bestimmung einer Schichtdicke einer Schicht (3d) unterscheidet sich von denjenigen in Fig. 1 bis 4 gezeigten dadurch, dass nicht die gesamte Beschichtungsoberfläche (7d) bestrahlt wird, sondern einzelne, diskrete Oberflächenbereiche (22, 23, 24, 25). Die Oberflächenbereiche (22-25) werden nacheinander mit einem Laser (4d) einer Strahlungsquelle (5d) einmalig oder periodisch zur Erwärmung bestrahlt und emittierte Wärmestrahlung wird von einer Detektionseinrichtung (8d) erfasst. Obwohl eine Größe eines Anregungsflecks, das heißt ein Durchmesser eines in dem jeweiligen Oberflächenbereich (22-25) auf die Oberfläche (7d) auftreffenden Laserstrahls der Größe des vorzugsweise runden, bestrahlten Oberflächenbereichs (22-25) entspricht, ist denkbar, dass ein Messfleck kleiner als der Anregungsfleck ist. Eine Auswerteinrichtung (13d) ermittelt die Schichtdicke der Schicht (3d) für jeden einzelnen Oberflächenbereich (22-25) und kann entweder Dickenwerte auf einem Anzeigebildschirm (14d) anzeigen oder durch Inter- und Extrapolation der Schichtdickenwerte der Oberflächenbereiche (22-25) ein Schichtdickenprofil der Beschichtungsoberfläche (7d) ermitteln und anzeigen.

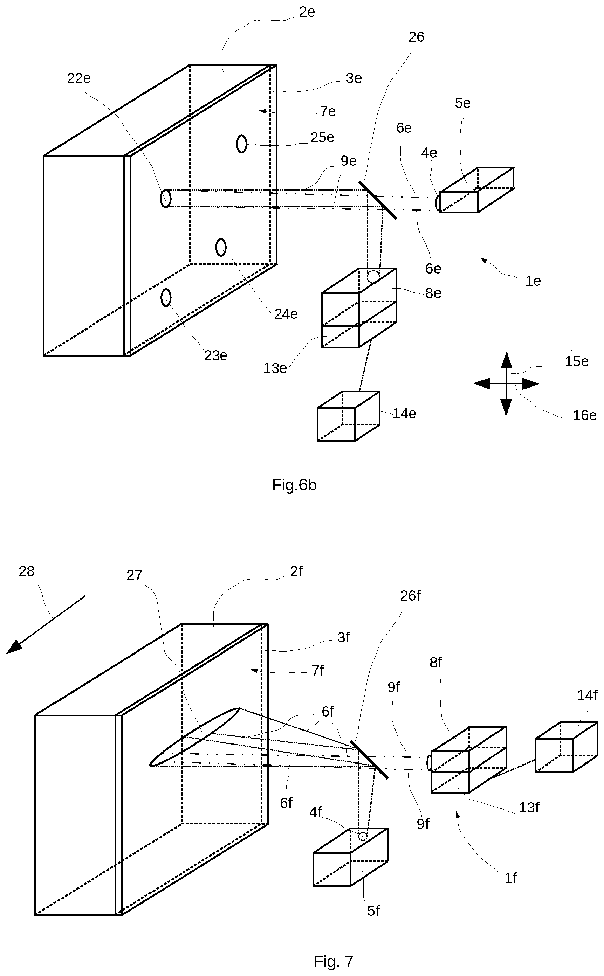

Es wird nun auf Fig. 6 Bezug genommen, wo gleiche oder gleichwirkende Teile mit derselben Bezugszahl wie in Fig. 1 bis 5 bezeichnet sind und der betreffenden Bezugszahl jeweils der Buchstabe e beigefügt ist.

Eine in Fig. 6a gezeigte Vorrichtung (1e) unterscheidet sich von denjenigen in Fig. 1 bis 5 gezeigten dadurch, dass ein Strahlengang einer Strahlungsquelle (5e) und derjenige einer Detektionseinrichtung (8e) abschnittsweise parallel sind. Dazu sind die Strahlungsquelle (5e) zur Bestrahlung einer Oberfläche (7e) und eine Detektionseinrichtung (8e) senkrecht zueinander angeordnet. Licht der Strahlungsquelle (5e) wird durch einen dichroitischen Strahlteiler (26) in Richtung einer Oberfläche (7e) umgelenkt, während durch Erwärmung der Oberfläche (7e) emittierte Wärmestrahlung durch den Strahlteiler (26) in Richtung der Detektionseinrichtung (8e) hindurchtreten kann. Vorteilhaft ermöglicht diese Ausführungsform unabhängig von einem Abstand der Strahlungsquelle (5e) zu der Oberfläche (7e) eine genaue Bestimmung der Schichtdicke. Obwohl in diesem Ausführungsbeispiel eine Bestimmung der Schichtdicke in bestimmten Oberflächenbereichen (22e-25e) erfolgt, ist denkbar, dass die gesamte Oberfläche (7e) bestrahlt wird.

Außerdem ist denkbar, dass ein in Fig. 6b gezeigter Strahlteiler (26) als Lochspiegel ausgebildet ist, bei dem Licht einer Strahlungsquelle durch ein Loch im Lochspiegel hindurchtritt und emittierte Wärmestrahlung durch einen spiegelnden Teil des Lochspiegels in Richtung einer Detektionseinrichtung umgelenkt wird. Ein Lochspiegel ist insbesondere dann vorteilhaft, wenn ein Laser oder eine Strahlungsquelle mit hoher räumlicher Kohärenz wie eine superluminiszente Diode als Strahlungsquelle (5e) verwendet wird.

Es wird nun auf Fig. 7 Bezug genommen, wo gleiche oder gleichwirkende Teile mit derselben Bezugszahl wie in Fig. 1 bis 6 bezeichnet sind und der betreffenden Bezugszahl jeweils der Buchstabe f beigefügt ist.

Eine in Fig. 7 gezeigte Vorrichtung (1f) unterscheidet sich von denjenigen in Fig. 1 bis 6 gezeigten dadurch, dass die Vorrichtung (1f) zur Bestimmung einer Schichtdicke eines beschichteten Bandes (2f) eingerichtet ist.

Eine Strahlungsquelle (5f) bestrahlt - impulsartig oder periodisch moduliert - einen schmalen Oberflächenbereich (27) des beschichteten, sich an der Vorrichtung (1f) in Richtung eines Pfeiles (28) vorbeibewegenden Bandes (2f), der sich parallel zu einer Bewegungsrichtung des Bandes (2f) erstreckt. Zur Bewegung des Bandes (2f) kann ein in Fig. 7 nicht gezeigtes Fördermittel, das beispielsweise eine Haspel umfassen kann, vorgesehen sein.

Eine ortsfeste Detektionseinrichtung (8f) erfasst abgestrahlte Wärme des schmalen, sich bewegenden Oberflächenbereichs (27) und ermittelt aus mehreren ermittelten Schichtdicken durch Mittelwertbildung eine mittlere Schichtdicke.

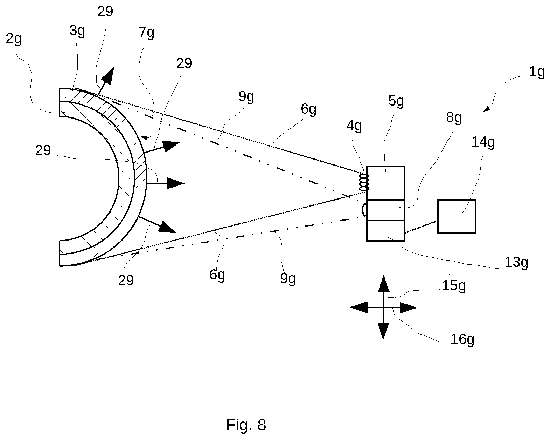

Es wird nun auf Fig. 8 Bezug genommen, wo gleiche oder gleichwirkende Teile mit derselben Bezugszahl wie in Fig. 1 bis 7 bezeichnet sind und der betreffenden Bezugszahl jeweils der Buchstabe g beigefügt ist.

Eine in Fig. 8 in einer Seitenansicht gezeigte Vorrichtung (1g) unterscheidet sich von denjenigen in Fig. 1 bis 7 gezeigten dadurch, dass eine Strahlungsquelle (5g) zur Ausbildung eines Bestrahlungskegels (6g) vorgesehen ist, dessen Strahlen schräg zu einer Normalen (29) auf eine Beschichtungsoberfläche (7g) auftreffen. Dadurch, dass eine Zeitverzögerung, mit der Wärmestrahlung emittiert wird, unabhängig von einem Auftreffwinkel von Anregungsstrahlung einer Strahlungsquelle auf eine Beschichtungsoberfläche (7g) ist, ist zur Bestimmung einer Schichtdicke ein senkrechtes Auftreffen von Strahlen des Bestrahlungskegels (6g) nicht erforderlich. Vorteilhaft kann mit dem Verfahren an gekrümmten, beschichteten Substraten wie Karosserieanbauteilen, Laptopgehäusen, Mobiltelefongehäusen oder Mobiltelefonschutzhüllen eine Schichtdicke ohne wiederholende Neuausrichtung der Strahlungsquelle (5g) und/oder der Detektionseinrichtung (8g) bestimmt werden.

Denkbar ist, dass eine Vorrichtung (1-1g) bewegbar und vorzugsweise an einen Industrieroboter angebracht ist. Dadurch können automatisiert mehrere Oberflächenbereiche (7; 7a; 7b; 7c; 22-25; 22e-25e; 27; 7g) nacheinander erfasst werden.

Denkbar ist außerdem, dass in einen von einem Bestrahlungskegel (6-g) gebildeten Strahlengang ein optisches System, das das beispielsweise eine Linse umfassen kann, eingebracht ist.

Ferner kann ein durch Bestrahlung erwärmter Oberflächenbereich (22-25; 22e-25e; 27) eine kleinere Größe aufweisen als eine Größe des auf die Oberfläche (7; 7a; 7b; 7c; 7g) auftreffenden Bestrahlungskegels (6-g) oder kann maximal genauso groß sein.

## Patentansprüche

1. Photothermisches Verfahren zur Bestimmung einer Schichtdicke einer auf ein Substrat (2-2g) aufgebrachten Schicht, insbesondere einer Lackschicht, bei dem zumindest ein Oberflächenbereich (7-7c; 22-25; 22e-25e; 27; 7g) des beschichteten Substrats (2-2g) durch Bestrahlung mit mindestens einer Strahlungsquelle (5-5b; 5c, 19; 5d-g) erwärmt wird und von dem zumindest einen Oberflächenbereich (7-7c; 22-25; 22e-25e; 27; 7g) emittierte Wärmestrahlung von einer Detektionseinrichtung (8-8g) erfasst wird, und die Schichtdicke anhand der emittierten Wärmestrahlung bestimmt wird, wobei mehrere benachbarte Oberflächenbereiche (22-25; 22e-25e) gleichzeitig oder nacheinander von der mindestens einen Strahlungsquelle (5-5b; 5c, 19; 5d-g) bestrahlt werden und durch eine Auswerteinrichtung (14-14g) ein grafisch darstellbares Schichtdickenprofil einer zu vermessenden Oberfläche erstellt wird,
**dadurch gekennzeichnet,**
**dass** die mindestens eine Strahlungsquelle (5-5b; 5c, 19; 5d-g) einen Quantenkaskadenlaser umfasst, und die von dem zumindest einen Oberflächenbereich (7-7c; 22-25; 22e-25e; 27; 7g) emittierte Wärmestrahlung von einer Bolometerkamera (8-8g) erfasst wird.

2. Photothermisches Verfahren nach Anspruch 1,
**dadurch gekennzeichnet,**
**dass** der mindestens eine Oberflächenbereich (7-7c; 22-25; 22e-25e; 27; 7g) mit einer monochromatischen und/oder kohärenten Strahlungsquelle (5-5b; 5c, 19; 5d-g) bestrahlt wird oder mit elektromagnetischer Strahlung eines bestimmten Wellenlängenbereichs, vorzugsweise zwischen 200 nm und 15 µm, insbesondere zwischen 200 und 750 nm, zwischen 800 und 3500 nm oder zwischen 4 und 13 µm.

3. Photothermisches Verfahren nach Anspruch 1 oder 2,
**dadurch gekennzeichnet,**
**dass** der mindestens eine Oberflächenbereich (7-7c; 22-25; 22e-25e; 27; 7g) mit mehreren gleichen oder voneinander verschiedenen Strahlungsquellen (5c, 19) bestrahlt wird.

4. Photothermisches Verfahren nach einem der Ansprüche 1 bis 3,
**dadurch gekennzeichnet,**
**dass** der mindestens eine Oberflächenbereich (7-7c; 22-25; 22e-25e; 27; 7g) mit mehreren Strahlungsquellen (5c, 19) bestrahlt wird, von denen jede zur Erzeugung elektromagnetischer Strahlung eines bestimmten Wellenlängenbereichs oder einer bestimmten Wellenlänge eingerichtet ist.

5. Photothermisches Verfahren nach einem der Ansprüche 1 bis 4,
**dadurch gekennzeichnet,**
**dass** die Bestrahlung des mindestens einen Oberflächenbereichs (7-7c; 22-25; 22e-25e; 27; 7g) periodisch moduliert erfolgt, insbesondere mit einer Frequenz zwischen 0,01 und 2000 Hz, vorzugsweise 20 bis 800 Hz.

6. Photothermisches Verfahren nach einem der Ansprüche 1 bis 5,
**dadurch gekennzeichnet,**
**dass** der mindestens eine Oberflächenbereich (7-7c; 22-25; 22e-25e; 27; 7g) eine Größe, insbesondere einen Durchmesser, zwischen 0,2 µm und 200 cm aufweist, vorzugsweise zwischen 1 und 20 µm oder 0,2 und 2 cm.

7. Photothermisches Verfahren nach einem der Ansprüche 1 bis 6,
**dadurch gekennzeichnet,**
**dass** der mindestens eine Oberflächenbereich (7-7c; 22-25; 22e-25e; 27; 7g) schräg oder parallel zu einer Oberflächennormalen (29) angestrahlt wird.

8. Photothermisches Verfahren nach einem der Ansprüche 1 bis 7,
**dadurch gekennzeichnet,**
**dass** eine Voraberwärmung des beschichteten Substrats vor Beginn der Bestrahlung erfolgt.

9. Vorrichtung (1-1 g) zur photothermischen Bestimmung einer Schichtdicke einer auf ein Substrat (2-2g) aufgebrachten Schicht, insbesondere einer Lackschicht, die mindestens eine Strahlungsquelle (5-5b; 5c, 19; 5d-g) zur Erwärmung mindestens eines Oberflächenbereichs (7-7c; 22-25; 22e-25e; 27; 7g) ausschließlich durch Bestrahlung, mindestens eine Detektionseinrichtung (8-8g) zur Erfassung von von dem zumindest einen Oberflächenbereich (7-7c; 22-25; 22e-25e; 27; 7g) emittierter Wärmestrahlung und eine Auswerteinrichtung (14-14g) zur Ermittlung einer Schichtdicke aufweist, wobei die Detektionseinrichtung (8-8g) zur gleichzeitigen oder aufeinanderfolgenden Erfassung mehrerer Oberflächenbereiche (7-7c; 22-25; 22e-25e; 27; 7g) eingerichtet ist, und wobei durch die Auswerteinrichtung (14-14g) ein grafisch darstellbares Schichtdickenprofil einer zu vermessenden Oberfläche erstellbar ist,
**dadurch gekennzeichnet,**
**dass** die die mindestens eine Strahlungsquelle (5-5b; 5c, 19; 5d-g) einen Quantenkaskadenlaser umfasst und die Detektionseinrichtung (8-8g) eine Bolometerkamera aufweist.

10. Vorrichtung nach Anspruch 9,
**dadurch gekennzeichnet,**
**dass** die mindestens eine Strahlungsquelle (5-5b; 5c, 19; 5d-g) zur periodischen Bestrahlung des mindestens einen Oberflächenbereichs (7-7c; 22-25; 22e-25e; 27; 7g) eingerichtet ist.

11. Vorrichtung nach Anspruch 9 oder 10,
**dadurch gekennzeichnet,**
**dass** die mindestens eine Strahlungsquelle (5-5b; 5c, 19; 5d-g) und/oder die Detektionseinrichtung (8-8g) bewegbar angeordnet und dazu eingerichtet ist bzw. sind, an mehreren insbesondere benachbarten Oberflächenbereichen (7-7c; 22-25; 22e-25e; 27; 7g) vorbeigeführt zu werden.

12. Vorrichtung nach einem der Ansprüche 9 bis 11,
**dadurch gekennzeichnet,**
**dass** die mindestens eine Strahlungsquelle (5-5b; 5c, 19; 5d-g) und/oder die Detektionseinrichtung (8-8g) ortsfest angeordnet ist bzw. sind und ein Fördermittel vorgesehen ist, welches dazu eingerichtet ist, das beschichtete Substrat (2-2g) mit den zu erwärmenden Oberflächenbereichen (7-7c; 22-25; 22e-25e; 27; 7g) an der Strahlungsquelle (5-5b; 5c, 19; 5d-g)und/oder der Detektionseinrichtung (8-8g) derart vorbeizuführen, dass eine Erwärmung sowie eine Erfassung von von dem zumindest einen Oberflächenbereich (7-7c; 22-25; 22e-25e; 27; 7g) emittierter Wärmestrahlung erfolgen kann.

## Claims

1. Photothermal method for determining a layer thickness of a layer applied to a substrate (2-2g), in particular a lacquer layer, in which at least one surface region (7-7c; 22-25; 22e-25e; 27; 7g) of the coated substrate (2-2g) is heated by irradiation with at least one radiation source (5-5b; 5c, 19; 5d-g) and thermal radiation emitted by the at least one surface region (7-7c; 22-25; 22e-25e; 27; 7g) is detected by a detection device (8- 8g), and the layer thickness is determined on the basis of the emitted thermal radiation, wherein a plurality of adjacent surface regions (22-25; 22e-25e) are irradiated simultaneously or successively by the at least one radiation source (5-5b; 5c, 19; 5d-g) and an evaluation device (14-14g) is used to create a graphically displayable layer thickness profile of a surface to be measured,
**characterized in that**
the at least one radiation source (5-5b; 5c, 19; 5d-g) comprises a quantum cascade laser, and the thermal radiation emitted by the at least one surface region (7-7c; 22-25; 22e-25e; 27; 7g) is detected by a bolometer camera (8-8g).

2. Photothermal method according to claim 1,
**characterized in that**
the at least one surface region (7-7c; 22-25; 22e-25e; 27; 7g) is irradiated with a monochromatic and/or coherent radiation source (5-5b; 5c, 19; 5d-g) or with electromagnetic radiation of a specific wavelength range, preferably between 200 nm and 15 µm, in particular between 200 and 750 nm, between 800 and 3500 nm or between 4 and 13 µm.

3. Photothermal method according to claim 1 or 2,
**characterized in that**
the at least one surface region (7-7c; 22-25; 22e-25e; 27; 7g) is irradiated with a plurality of radiation sources (5c, 19) which are the same or different from one another.

4. Photothermal method according to one of claims 1 to 3,
**characterized in that**
the at least one surface region (7-7c; 22-25; 22e-25e; 27; 7g) is irradiated with a plurality of radiation sources (5c, 19), each of which is set up to generate electromagnetic radiation of a specific wavelength range or a specific wavelength.

5. Photothermal method according to one of claims 1 to 4,
**characterized in that**
the irradiation of the at least one surface region (7-7c; 22-25; 22e- 25e; 27; 7g) is periodically modulated, in particular with a frequency between 0,01 and 2000 Hz, preferably 20 to 800 Hz.

6. Photothermal method according to one of claims 1 to 5,
**characterized in that**
the at least one surface region (7-7c; 22-25; 22e-25e; 27; 7g) has a size, in particular a diameter, between 0,2 µm and 200 cm, preferably between 1 and 20 µm or 0,2 and 2 cm.

7. Photothermal process according to one of claims 1 to 6,
**characterized in that**
the at least one surface region (7-7c; 22-25; 22e-25e; 27; 7g) is irradiated obliquely or parallel to a surface normal (29).

8. Photothermal method according to one of claims 1 to 7,
**characterized in that**
a preheating of the coated substrate takes place before the start of the irradiation.

9. Device (1-1 g) for photothermally determining a layer thickness of a layer applied to a substrate (2-2g), in particular a lacquer layer, which has at least one radiation source (5-5b; 5c, 19; 5d-g) for heating at least one surface region (7-7c; 22-25; 22e-25e; 27; 7g) solely by irradiation, at least one detection device (8-8g) for detecting thermal radiation emitted by the at least one surface region (7-7c; 22-25; 22e-25e; 27; 7g) and an evaluation device (14-14g) for determining a layer thickness, wherein the detection device (8-8g) is set up for the simultaneous or successive detection of several surface regions (7-7c; 22-25; 22e-25e; 27; 7g), and
wherein a graphically displayable layer thickness profile of a surface to be measured may be created by the evaluation device (14-14g),
**characterized in that**
the at least one radiation source (5-5b; 5c, 19; 5d-g) comprises a quantum cascade laser and the detection device (8-8g) has a bolometer camera.

10. Device according to claim 9,
**characterized in that**
the at least one radiation source (5-5b; 5c, 19; 5d-g) is set up for periodically irradiating the at least one surface region (7-7c; 22-25; 22e-25e; 27; 7g).

11. Device according to claim 9 or 10,
**characterized in that**
the at least one radiation source (5-5b; 5c, 19; 5d-g) and/or the detection device (8-8g) is or are arranged movably and is or are set up to be guided past a plurality of, in particular, adjacent surface regions (7-7c; 22-25; 22e-25e; 27; 7g).

12. Device according to any one of claims 9 to 11,
**characterized in that**
the at least one radiation source (5-5b; 5c, 19; 5d-g) and/or the detection device (8-8g) is or are arranged in a fixed position and a conveying means is provided, which is set up to guide the coated substrate (2-2g) with the surface regions (7-7c; 22-25; 22e-25e; 27; 7g) to be heated past the radiation source (5-5b; 5c, 19; 5d-g) and/or past the detection device (8-8g) in such a way that heating and detection of thermal radiation emitted by the at least one surface region (7-7c; 22-25; 22e-25e; 27; 7g) can take place.

## Revendications

1. Procédé photothermique pour la détermination d'une épaisseur de couche d'une couche appliquée sur un substrat (2-2g), en particulier une couche de vernis, dans lequel au moins une zone superficielle (7-7c; 22-25 ; 22e-25e ; 27 ; 7g) du substrat revêtu (2-2g) est chauffée par irradiation avec au moins une source de rayonnement (5-5b ; 5c, 19 ; 5d-g) et le rayonnement thermique émis par la au moins une zone superficielle (7-7c ; 22-25 ; 22e-25e ; 27 ; 7g) est détecté par un dispositif de détection (8- 8g), et l'épaisseur de la couche est déterminée sur la base du rayonnement thermique émis, dans lequel une pluralité de zones de surface adjacentes (22-25 ; 22e-25e) sont irradiées simultanément ou successivement par la au moins une source de rayonnement (5-5b ; 5c, 19 ; 5d-g) et un dispositif d'évaluation (14-14g) est utilisé pour créer un profil d'épaisseur de couche, pouvant être représenté graphiquement, d'une surface à mesurer,
**caractérisé en ce que**
ladite au moins une source de rayonnement (5-5b ; 5c, 19 ; 5d-g) comprend un laser à cascade quantique, et le rayonnement thermique émis par ladite au moins une zone superficielle (7-7c ; 22-25 ; 22e-25e ; 27 ; 7g) est détecté par une caméra bolométrique (8-8g).

2. Procédé photothermique selon la revendication 1,
**caractérisée en ce que**
ladite au moins une zone superficielle (7-7c ; 22-25 ; 22e-25e ; 27 ; 7g) est irradiée par une source de rayonnement monochromatique et/ou cohérent (5-5b ; 5c, 19 ; 5d-g) ou par un rayonnement électromagnétique d'une gamme de longueurs d'onde spécifique, de préférence entre 200 nm et 15 µm, en particulier entre 200 et 750 nm, entre 800 et 3500 nm ou entre 4 et 13 µm.

3. Procédé photothermique selon la revendication 1 ou 2,
**caractérisé en ce que**
ladite au moins une zone superficielle (7-7c ; 22-25 ; 22e-25e ; 27 ; 7g) est irradiée par une pluralité de sources de rayonnement (5c, 19) identiques ou différentes les unes des autres.

4. Procédé photothermique selon l'une des revendications 1 à 3,
**caractérisé en ce que**
ladite au moins une zone superficielle (7-7c ; 22-25 ; 22e-25e ; 27 ; 7g) est irradiée par plusieurs sources de rayonnement (5c, 19), chacune d'entre elles étant configurée pour générer un rayonnement électromagnétique d'une gamme de longueurs d'onde spécifique ou d'une longueur d'onde spécifique.

5. Procédé photothermique selon l'une des revendications 1 à 4,
**caractérisé en ce que**
l'irradiation de ladite au moins une zone superficielle (7-7c ; 22-25 ; 22e- 25e ; 27 ; 7g) est modulée périodiquement, en particulier avec une fréquence entre 0,01 et 2000 Hz, de préférence entre 20 et 800 Hz.

6. Procédé photothermique selon l'une des revendications 1 à 5,
**caractérisé en ce que**
ladite au moins une zone superficielle (7-7c ; 22-25 ; 22e-25e ; 27 ; 7g) a une taille, en particulier un diamètre, entre 0,2 µm et 200 cm, de préférence entre 1 et 20 µm ou entre 0,2 et 2 cm.

7. Procédé photothermique selon l'une des revendications 1 à 6,
**caractérisé en ce que**
ladite au moins une zone superficielle (7-7c ; 22-25 ; 22e-25e ; 27 ; 7g) est irradiée obliquement ou parallèlement à une normale de surface (29).

8. Procédé photothermique selon l'une des revendications 1 à 7,
**caractérisé en ce que**
un préchauffage du substrat revêtu est effectué avant le début de l'irradiation.

9. Dispositif (1-1g) pour la détermination photothermique d'une épaisseur de couche d'une couche appliquée sur un substrat (2-2g), en particulier d'une couche de vernis, qui comprend au moins une source de rayonnement (5-5b ; 5c, 19 ; 5d-g) pour le chauffage d'au moins une zone superficielle (7-7c ; 22-25 ; 22e-25e ; 27 ; 7g) exclusivement par irradiation, au moins un dispositif de détection (8-8g) pour la détection de rayonnement émis par la au moins une zone superficielle (7-7c ; 22-25 ; 22e-25e ; 27 ; 7g) et un dispositif d'évaluation (14-14g) pour déterminer une épaisseur de couche, le dispositif de détection (8-8g) étant conçu pour détecter simultanément ou successivement plusieurs zones superficielles (7-7c ; 22-25 ; 22e-25e ; 27 ; 7g), et le dispositif d'évaluation (14-14g) permettant d'établir un profil d'épaisseur de couche, pouvant être représenté graphiquement, d'une surface à mesurer,
**caractérisé en ce que**
la au moins une source de rayonnement (5-5b ; 5c, 19 ; 5d-g) comprend un laser à cascade quantique et que le dispositif de détection (8-8g) comprend une caméra bolométrique.

10. Dispositif selon la revendication 9,
**caractérisé en ce que**
ladite au moins une source de rayonnement (5-5b ; 5c, 19 ; 5d-g) est configurée pour irradier périodiquement ladite au moins une zone superficielle (7-7c ; 22-25 ; 22e-25e ; 27 ; 7g).

11. Dispositif selon la revendication 9 ou 10,
**caractérisé en ce que**
ladite au moins une source de rayonnement (5-5b ; 5c, 19 ; 5d-g) et/ou le dispositif de détection (8-8g) est ou sont disposés de manière mobile et est ou sont aménagés de manière à passer devant plusieurs zones superficielles (7-7c ; 22-25 ; 22e-25e ; 27 ; 7g) notamment voisines.

12. Dispositif selon l'une quelconque des revendications 9 à 11,
**caractérisé en ce que**
ladite au moins une source de rayonnement (5-5b ; 5c, 19 ; 5d-g) et/ou le dispositif de détection (8-8g) est ou sont disposés de manière fixe et qu'il est prévu un moyen de transport qui est conçu pour transporter le substrat revêtu (2-2g) avec les zones superficielles (7-7c ; 22-25 ; 22e-25e ; 27 ; 7g) à chauffer devant la source de rayonnement (5-5b ; 5c, 19 ; 5d-g) et/ ou devant le dispositif de détection (8-8g) de telle manière qu'un chauffage ainsi qu'une détection du rayonnement thermique émis par ladite au moins une zone superficielle (7-7c ; 22-25 ; 22e-25e ; 27 ; 7g) puissent avoir lieu.
